# EUROPEAN PATENT APPLICATION

(11) **EP 2 280 351 A1**
(43) Date of publication of application: **02.02.2011**
(21) Application number: 10153427.9
(22) Date of filing: 12.02.2010
(51) Int. Cl.: G06F 13/42

(54) **Methods and apparatus dynamic management of multiplexex phys in a serial attached SCSI domain**

(30) Priority: 21.07.2009 US 506831
(71) Applicant: LSI Corporation, Milpitas, CA 95035 (US)
(72) Inventor: Uddenberg, David T., Colorado Springs, CO 80920 (US); Slutz, Mark, Colorado Springs, CO 80924 (US); Varney, Brian J., Colorado Springs, CO 80919 (US)
(74) Representative: Williams, David John

(57) **Abstract**

Methods and systems for automatically, dynamically reconfiguring multiplexing functions of a PHY of a SAS device in response to monitored performance of the PHY and/or in response to changes in configuration of devices in the SAS domain. A SAS device (102) such as a SAS initiator or a SAS expander in a SAS domain may monitor performance (104) of PHYs (110) of the device to detect bandwidth utilization and may reconfigure multiplexing functions (106) of a PHY to improve bandwidth utilization of the PHYs of the device. The device may also detect changes (104) in the topology of the SAS domain such as addition of new devices or removal of device and adjust multiplexing functions of its PHYs accordingly to improve performance of communications in the SAS domain.

## Description

### PROBLEM

SAS comprises a family of standards for a computer system to couple with storage devices through storage controllers. Many details of the SAS family of standards may be found at www.t10.org. For example, a storage controller may communicate with a storage device (including a SAS disk drive) according to the Serial SCSI Protocol (SSP) standard and may manage devices in the domain using the Serial Management Protocol (SMP).

The SAS version 2 specifications (SAS-2 section 6.10) add a specification for multiplexing functions of a physical link. Specifically, the SAS-2 specifications permit the PHY layer logic to incorporate the multiplexing functions. As used herein, "physical link" refers to a PHY layer logic element wherein multiplexing functions may be integrated as specified by the SAS-2 standards. Time-based multiplexing functions of SAS-2 (often referred to as "time domain multiplexing" or simply "TDM") permit a physical link with a higher available bandwidth to logically divide the available bandwidth to provide for logical links to multiple SAS devices. For example a PHY may provide a maximum data rate of 6 Gbps. If the PHY is capable of using multiplexing functions, that available bandwidth could be divided so that two 3 Gbps devices may couple (through logical links) using the same 6 Gbps PHY. Each device is allocated a portion of time to use the PHY at its lower speed. Or for example, four 1.5 Gbps devices could use the same 6 Gbps PHY. In one common application of such multiplexing features, a SAS initiator may couple with a SAS expander device using one physical link (i.e., one PHY). The physical link may be configured to enable multiplexing functions such that the single PHY may be used to couple the SAS initiator with multiple SAS devices (through the SAS expander and any other intervening expanders of the SAS domain).

The multiplexing functions may be enabled in a suitably compliant SAS controller such as a SAS initiator or a SAS expander when coupling to other SAS expanders or to SAS devices such as storage devices. When the PHY is configured for supporting multiple devices each at a fraction of the maximum available bandwidth, a higher speed device may not be coupled with the PHY using its full speed capability. For example, if the 6 Gbps PHY is presently configured to support two 3 Gbps devices, a 6 Gbps device cannot be coupled with that PHY and utilize its full capability of 6 Gbps (it would be limited to 3 Gbps - half its throughput capability). Thus even though both "halves" of the 6 Gbps PHY (each capable of operating at 3 Gbps using multiplexing techniques) may be available for connecting, a 6 Gbps device cannot connect thereto at its full speed.

As presently practiced, the configuration of PHYs to use or not use multiplexing functions is determined only at initial configuration of the SAS domain-typically by manual processes of an administrator analyzing the needs of the presently configured SAS domain. This static, initially determined configuration of PHYs to use or not use multiplexing functions may degrade performance of the SAS domain if/when the configuration of the domain changes such as when devices are added or subtracted. Multiplexing functions are determined for a PHY as part of the SAS speed negotiation process based on the configuration parameters for multiplexing for each PHY as specified by the administrator. Thus the configuration manually determined by the administrator is set at initial power up ("start of day") for the SAS domain. The static configuration does not account for changes in the domain as new devices are added or devices are removed (such as for a failure). Present practices require that the entire domain be essentially unavailable to allow manual reconfiguration of multiplexing parameters of the PHYs.

Thus it is an ongoing challenge to maintain performance of a SAS domain configured to use multiplexing functions of PHYs in the domain.

### SOLUTION

The present invention solves the above and other problems, thereby advancing the state of the useful arts, by providing methods and systems for automatically monitoring performance of PHYs in the SAS domain and/or sensing changes in the SAS domain from addition or removal of devices and automatically reconfiguring multiplexing functions of one or more PHYs. In response to sensing degraded performance based on the present configuration of multiplexing functions in PHYs of the domain, a new configuration may be determined and automatically reconfigured. PHYs may be reconfigured to enable or disable multiplexing functions to improve performance of the SAS domain without requiring restart of the entire domain. Only affected, reconfigured PHYs are restarted.

In one aspect hereof, a method is provided for managing multiplexing functions of a PHY of a SAS device in a SAS domain. The method is operable in the SAS device. The method includes monitoring, within the SAS device, bandwidth performance of the PHY. Responsive to the monitored bandwidth performance, the method includes dynamically reconfiguring the PHY to modify use of multiplexing functions while another PHY of the SAS device continues operation uninterrupted by performing the method.

Another aspect hereof provides a method operable in an expander device coupled with a SAS domain for adjusting multiplexing parameters of a PHY of the SAS domain. The method includes monitoring configuration of devices and PHYs of the SAS domain and determining from the configuration a new configuration for multiplexing parameters of a PHY. The method then adjusts multiplexing parameters of the PHY based on the new configuration and restarts the PHY with the adjusted multiplexing parameters. The method is performed while other PHYs of the SAS domain continue operation uninterrupted by the performance of the method.

Still another aspect hereof provides a SAS device in a SAS domain. The SAS device includes a configuration monitor module adapted to monitor configuration and performance of devices and PHYs in the SAS domain. The device also includes a PHY reconfiguration module coupled with the configuration monitor module to receive information regarding configuration and performance of devices and PHYs of the SAS domain. The PHY reconfiguration module is adapted to reconfigure multiplexing parameters of the PHY while other PHYs of the SAS domain continue operation uninterrupted.

### BRIEF DESCRIPTION OF THE DRAWINGS

FIG. 1 is a block diagram of an exemplary SAS domain including a SAS device enhanced in accordance with features and aspects hereof to automatically and dynamically reconfigure multiplexing parameters of one or more PHYs based on monitored performance of the SAS domain and changes in configuration of the domain.

FIG. 2 is a flowchart describing an exemplary method in accordance with features and aspects hereof to automatically and dynamically reconfigure multiplexing parameters of one or more PHYs based on monitored performance of the SAS domain and changes in configuration of the domain.

FIG. 3 is a flowchart describing another exemplary method in accordance with features and aspects hereof to automatically and dynamically reconfigure multiplexing parameters of one or more PHYs based on monitored performance of the SAS domain and changes in configuration of the domain.

FIG. 4 is a flowchart describing another exemplary method in accordance with features and aspects hereof to automatically and dynamically reconfigure multiplexing parameters of one or more PHYs based on monitored performance of the SAS domain and changes in configuration of the domain.

FIG. 5 is a flowchart describing an exemplary method in accordance with features and aspects hereof to reset/restart a PHY after reconfiguring multiplexing parameters thereof.

### DETAILED DESCRIPTION OF THE DRAWINGS

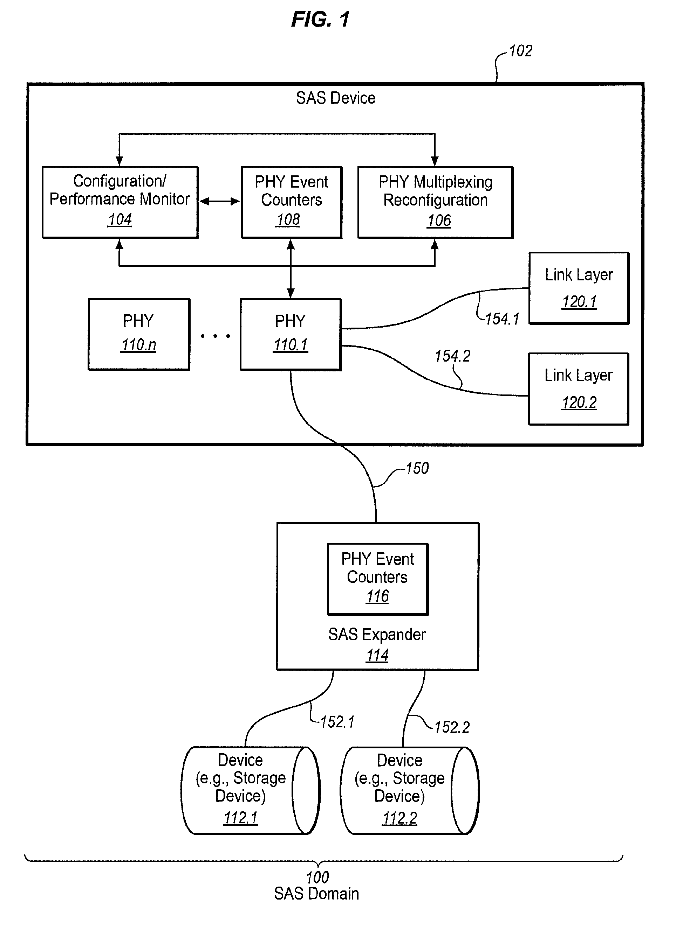

FIG. 1 is a block diagram of a SAS domain 100 including a SAS device 102 enhanced in accordance with features and aspects hereof to provide for dynamic, automated reconfiguration of multiplexing parameters for one or more PHYs of the SAS device 102. SAS device 102 may be any SAS controller including, for example, a SAS initiator such as a host bus adapter (HBA) or a SAS expander in the domain. SAS device 102 may include one or more PHYs 110.1 through 110.n for coupling with other devices of the SAS domain 100. Further, in accordance with the SAS version 2 (SAS-2) standards, some (or all) of PHYs 110.1 through 110.n may be capable of multiplexing functions to permit multiple devices to be coupled with SAS device 102 through a single PHY. As shown in FIG. 1, PHY 110.1 provides multiplexing capabilities to permit coupling of devices 112.1 and 112.2 through the single PHY interface (110.1) and SAS expander 114. Devices 112.1 and 112.2 may be any suitable SAS device including, for example, SAS expanders, storage devices such as hard disk drives (including serial advanced technology attachment (SATA) devices), etc. Communication paths 150, 152.1, and 152.2 may be SAS communication paths, SATA communication paths, or other suitable communication medium for coupling the devices (112.1 and 112.2), the expander (114) and SAS device (102).

Through use of the multiplexing functions of PHY 110.1, multiple link layer processing elements 120.1 and 120.2 may open multiple logical link connections each to a corresponding device 112.1 and 112.2, respectively. Thus a first logical link comprises link layer 120.1 coupled to device 112.1 via path 154.1, PHY 110.1, path 150, expander 114, and path 152.1. A second logical link couples link layer 120.2 to device 112.2 via path 154.2, PHY 110.1, path 150, expander 114, and path 152.2. In this manner, multiple logical links are defined that share the same physical link (PHY 110.1) configured to enable multiplexing features.

SAS device 102 may include configuration and performance monitor 104 adapted for monitoring performance and/or configuration of PHYs 110.1 through 110.n as well as the overall configuration of devices in SAS domain 100. In particular, configuration and performance monitor 104 may analyze information stored in PHY event counters 108 indicative of performance as measured by SAS frames exchanged over the various PHYs 110.1 through 110.n as well as other performance criteria. PHY event counters 108 may be implemented as any suitable storage component within SAS device 102 such as a RAM (e.g., a non-volatile memory component), a register file, etc. SAS device 102 may also include PHY multiplexing reconfiguration module 106 for reconfiguring multiplexing parameters of one or more PHYs 110.1 through 110.n. Based on performance criteria gathered by configuration and performance monitor 104, PHY multiplexing reconfiguration module 106 may automatically enable or disable multiplexing functions on one or more of PHYs 110.1 through 110.n. In addition, configuration and performance monitor 104 may analyze SAS Broadcast messages relating to reconfiguration of SAS domain 100. Such SAS Broadcast messages may be generated, for example, when new devices are added to SAS domain 100 or when devices previously coupled with SAS domain 100 are removed. Responsive to such changes in the configuration of the SAS domain, PHY multiplexing reconfiguration module 106 may further reconfigure multiplexing parameters of one or more of PHYs 110.1 through 110.n to improve performance of the SAS device 102 in its communication with other devices in the SAS domain 100.

Configuration and performance monitor 104 may also utilize SAS protocols (e.g., SMP) to retrieve and analyze PHY event counters 116 resident in other devices of SAS domain 100 such as depicted within SAS expander 114. Analysis of such performance criteria of other devices of SAS domain 100 allows SAS device 102 to provide reconfiguration of its PHYs 110.1 through 110.n as well as directing other SAS expanders to reconfigure their own PHYs based on the analysis of configuration and performance monitor 104 in SAS device 102.

By way of example, PHY 110.1 is shown as operating with multiplexing functions to permit device 102 to couple with multiple devices 112.1 and 112.2 sharing a single PHY. It may be determined by configuration and performance monitor 104 that the overall load on each of the plurality of PHYs is not balanced well in that another PHY is underutilized. Having made such a determination by monitoring performance and configuration of the PHYs 110.1 through 110.n of SAS device 102, PHY multiplexing reconfiguration module 106 may choose to reconfigure the various PHYs so as to enable or disable multiplexing functions on one or more of PHYs 110.1 through 110.n. Or, for example, if a new device is added to the SAS domain 100 and coupled with another PHY of device 102, the multiplexing configuration of the other PHY may be reconfigured. For example if the newly added device is a high speed SAS device, multiplexing functions of PHY 110.n may be disabled to permit the new high speed device to fully utilize the available bandwidth of PHY 110.n. In like manner, if a device (e.g., 112.2) is removed from SAS domain 100, analysis may determine that PHY 110.1 may be better utilized by reconfiguring it to disable multiplexing functions such that device 112.1, remaining coupled through PHY 110.1, may utilize the entire bandwidth of PHY 110.1. Numerous other exemplary analyses and corresponding reconfigurations will be readily apparent to those of ordinary skill in the art to reconfigure multiplexing functions of one or more PHYs to improve overall performance of SAS device 102 in communicating with other devices in SAS domain 100.

Those of ordinary skill in the art will readily recognize numerous additional and equivalent elements in SAS domain 100 and in particular within SAS device 102 adapted for normal operation of devices in such a SAS domain. Such additional and equivalent elements are omitted herein for simplicity and brevity of this discussion. In addition, those of ordinary skill in the art will readily recognize that SAS device 102 may comprise any suitable number of PHYs 110.1 through 110.n. The representation of PHYs 110.1 through 110.n in SAS device 102 is intended merely as exemplary of one possible embodiment of features and aspects hereof. Still further, any number of storage devices (e.g., 112.1 and 112.2) and expanders (e.g.,114) may be coupled through suitable communication paths to appropriate PHYs of SAS device 102. Thus the overall configuration depicted in FIG. 1 is intended merely as exemplary of one possible embodiment of a SAS domain 100 including a SAS device 102 enhanced in accordance with features and aspects hereof.

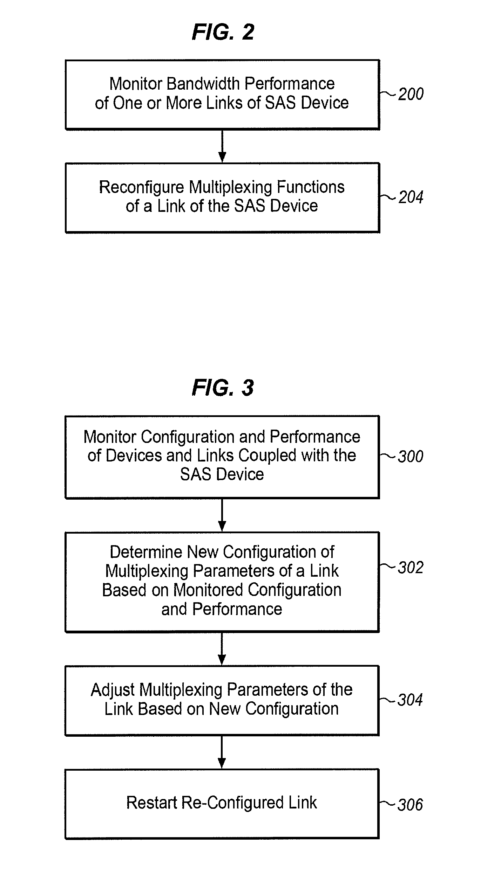

FIG. 2 is a flowchart describing an exemplary method in accordance with features and aspects hereof to dynamically reconfigure multiplexing functions of a PHY of a SAS device in a SAS domain. The method of FIG. 2 may be operable, for example, a system such as the exemplary system depicted in FIG. 1 and in particular may be operable in a SAS device such as device 102 of FIG. 1. Still more specifically the method of FIG. 2 may be operable in a SAS initiator and/or in a SAS expander of a SAS domain and may be implemented as suitably programmed instructions executed by a processor within the device and/or by suitably adapted custom circuits within the device.

Step 200 represents processing within the SAS device (e.g., within a SAS initiator or SAS expander) to monitor the bandwidth performance and configuration of one or more PHYs of the SAS device. As noted, such monitoring may be accomplished by, for example, reading the PHY event counters within the SAS device and/or PHY event counters of devices coupled with the SAS device through the various PHYs of the SAS device. Access to the PHY event counters within the SAS device may be achieved by standard electronic circuit or programmed instruction access to the counter information stored in a memory within the SAS device. Access to PHY event counters of other devices coupled with the SAS device may be performed by suitable inquiry using, for example, the SMP protocol or other SAS protocols or, in the alternative, by implementation of vendor specific communication protocols (e.g., sideband protocols with respect to the normal SAS communication capabilities).

Step 204 represents processing within the SAS device to reconfigure multiplexing functions of a PHY of the SAS device responsive to analysis of the performance information performed by monitoring of step 200. As noted above, the reconfiguration may comprise enabling and/or disabling multiplexing functions of one or more PHYs of the SAS device based upon a determination made that an alternative configuration of multiplexing functions of one or more PHYs of the SAS device would provide better performance for the SAS device in communications with other devices of the SAS domain. Addition or removal of a SAS device from the SAS domain may represent another type of event detected that may give rise to a new configuration for improved performance.

FIG. 3 is a flowchart describing another exemplary method in accordance with features and aspects hereof to dynamically monitor configuration and performance of one or more PHYs of a SAS device and to reconfigure multiplexing functions of one or more monitored PHYs to improve performance of the SAS device in communications with other devices of the SAS domain. The method of FIG. 3 may be operable, for example, in a SAS domain such as domain 100 of FIG. 1 and more specifically may be operable in a SAS device 102 of FIG. 1 such as a SAS initiator and/or SAS expander. Still more specifically the method of FIG. 3 may be operable in a SAS initiator and/or in a SAS expander of a SAS domain and may be implemented as suitably programmed instructions executed by a processor within the device and/or by suitably adapted custom circuits within the device.

Step 300 represents processing within the SAS device to monitor configuration and/or performance of devices coupled with the SAS device through PHYs of the SAS device. As noted above, the monitored information may include bandwidth utilization (e.g., load-balancing) among the various PHYs of the SAS device to identify underutilized and/or overutilized PHYs. In addition, the monitored information may include configuration information of the SAS domain including changes such as addition or removal of a device coupled with the SAS device performing the monitoring.

Step 302 analyzes the monitored information to determine a new configuration (if any) of multiplexing parameters for one or more PHYs of the SAS device. The new configuration may comprise enabling and/or disabling multiplexing functions of one or more PHYs of the SAS device to improve load-balancing or other performance measures of the SAS device in communicating with other devices of the SAS domain. Having so determined the new configuration (if any) step 304 then adjusts multiplexing parameters of one or more PHYs of the SAS device based on the new configuration information. For each PHY having such adjusted multiplexing parameters, step 306 restarts the reconfigured PHY to permit new speed negotiation utilizing the newly configured multiplexing parameters.

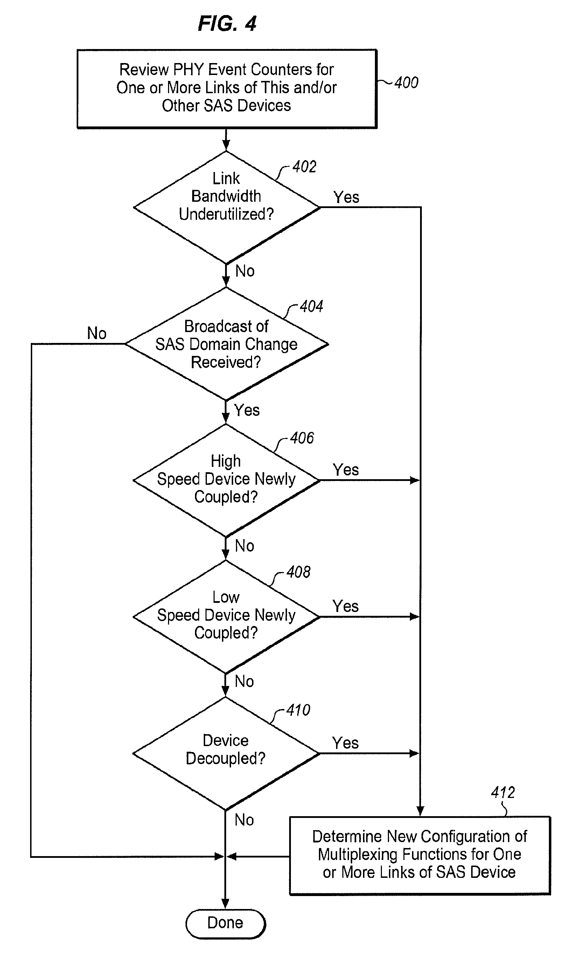

FIG. 4 is a flowchart describing an exemplary method for additional details of processing discussed in FIGS. 2 and 3 above. In particular, the exemplary method of FIG. 4 describes monitoring performance of PHYs based on PHY event counters in the SAS device and monitoring of configuration changes based on SAS Broadcast messages indicating a new configuration of the SAS domain. The method of FIG. 4 may be operable in a SAS domain as described in FIG. 1 and more specifically in a SAS device such as device 102 of FIG. 1. Still more specifically the method of FIG. 4 may be operable in a SAS initiator and/or in a SAS expander of a SAS domain and may be implemented as suitably programmed instructions executed by a processor within the device and/or by suitably adapted custom circuits within the device.

Step 400 represents processing to read PHY event counters of one or more PHYs of this SAS device or other devices coupled with this SAS device. As noted above reading of PHY counter information of this SAS device generally entails access to information stored in registers or other suitable memory structures associated with this SAS device. Standard features of a PHY layer logic element of a SAS device typically includes counting of various events associated with operation of each PHY. Such events may include frames received, frames transmitted, invalid frames received, etc. When reading PHY event counters of other devices coupled with this SAS device, SMP protocols may be utilized to query and retrieve such status information from another device. Other customized, vendor specific protocols may also be used as a matter of design choice.

Based on the event counter information, step 402 determines whether any PHYs of this or other SAS devices are presently underutilized. If so, step 412 is then operable to determine a new configuration of multiplexing functions for one or more PHYs of this or another SAS device to improve overall performance of the SAS domain. If no PHY is presently underutilized based on the monitored performance data, step 404 next determines whether any new SAS Broadcast messages have been received by this SAS device indicating a change in the topology or configuration of the SAS domain. As is well known to those of ordinary skill in the art, changes in the SAS domain generate SAS Broadcast messages permitting each SAS device to rediscover the changed topology of the SAS domain. If step 404 determines that no new Broadcast messages have been received processing of the method completes.

If step 404 determines that new SAS Broadcast messages have been received indicating a change in the topology or configuration of the SAS domain, steps 406 through 410 are operable to determine what type of change has been sensed. By way of example, step 406 detects whether a high-speed device is newly coupled with this or another SAS device. Step 408 determines whether a low-speed device has been newly coupled with this or another SAS device. Step 410 determines whether any device has been decoupled from this or another SAS device. When any of the changes detected by steps 406 through 410 are sensed, step 412 determines a new configuration as discussed above to enable and/or disable multiplexing functions of one or more PHYs of this or another SAS device to improve overall performance of the SAS domain. If none of these exemplary topology changes of the SAS domain have been sensed, processing of the method completes.

The methods of FIGS. 2 through 4 may be performed repeatedly within the SAS device to dynamically adjust to changes in the load-balancing of PHYs operating in the SAS domain and/or in response to changes in the topology or configuration of the SAS domain. In some exemplary embodiments, the methods of FIGS. 2 through 4 may be performed on a timed, periodic basis. In such embodiments, the frequency of monitoring need not be particularly high since configuration of multiplexing functionality of PHYs in the domain need not be frequently changed. In other embodiments, the method of FIGS. 2 through 4 may be performed in response to detection of specific performance related events or configuration related events. For example, methods to evaluate the current performance and configuration may be performed in response to sensing a configuration change in the SAS domain topology or in response to sensing a sufficient threshold number of domain configuration changes. Or, for example, methods to evaluate current performance and configuration may be performed in response to sensing a higher than normal error rate on a particular PHY due to overutilization or other performance criteria.

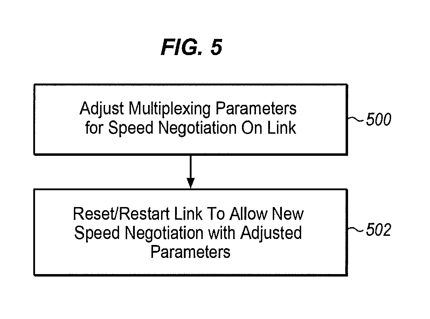

FIG. 5 is a flowchart describing an exemplary method in accordance with features and aspects hereof for applying newly configured multiplexing parameters to a specific PHY of the SAS device. The method of FIG. 5 may be operable in a SAS domain as described in FIG. 1 and more specifically in a SAS device such as device 102 of FIG. 1. Still more specifically the method of FIG. 5 may be operable in a SAS initiator and/or in a SAS expander of a SAS domain and may be implemented as suitably programmed instructions executed by a processor within the device and/or by suitably adapted custom circuits within the device.

Step 500 first adjusts the multiplexing parameters used in speed negotiation for an identified PHY that may benefit from reconfiguration. Step 502 then resets or restarts the affected PHY to allow a SAS speed negotiation process to be conducted utilizing the newly adjusted multiplexing parameters. In some embodiments, the method of FIG. 5 may schedule the reset or restart of the PHY in step 502 based on current operation of the PHY such that current transactions (e.g., presently open connections) may be completed. Thus the reconfiguration of the method of FIG. 5 may be deferred until an appropriate subsequent time when the PHY may be reset or restarted without interfering with presently open connections.

Those of ordinary skill in the art will readily recognize numerous additional and equivalent steps that may be performed in the methods of FIGS. 2 through 5. Such additional and equivalent steps are omitted herein for simplicity and brevity of this discussion.

While the invention has been illustrated and described in the drawings and foregoing description, such illustration and description is to be considered as exemplary and not restrictive in character. One embodiment of the invention and minor variants thereof have been shown and described. In particular, features shown and described as exemplary software or firmware embodiments may be equivalently implemented as customized logic circuits and vice versa. Protection is desired for all changes and modifications that come within the spirit of the invention. Those skilled in the art will appreciate variations of the above-described embodiments that fall within the scope of the invention. As a result, the invention is not limited to the specific examples and illustrations discussed above, but only by the following claims and their equivalents.

## Claims

**1.** A method for managing multiplexing functions of a PHY of a Serial Attached SCSI (SAS) device in a SAS domain, the method operable in the SAS device, the method comprising:
monitoring, within the SAS device, bandwidth performance of the PHY; and
responsive to the monitored bandwidth performance, dynamically reconfiguring the PHY to modify use of multiplexing functions while another PHY of the SAS device continues operation uninterrupted by performing the method.

**2.** The method of claim 1 further comprising:
determining from the monitored bandwidth performance that the PHY is underutilized.

**3.** The method of claim 2
wherein the step of reconfiguring further comprises:
enabling multiplexing functions of the PHY responsive to a determination that the bandwidth performance of the PHY is underutilized.

**3.** The method of claim 2
wherein the step of reconfiguring further comprises:
disabling multiplexing functions of the PHY responsive to a determination that the bandwidth performance of the PHY is underutilized.

**4.** The method of claim 1
wherein the step of monitoring further comprises one or more of:
detecting that one or more new devices are coupled with the SAS device;
detecting that one or more devices have been decoupled from the SAS device;
detecting the speed of a newly coupled device; and
detecting I/O request load on one or more devices coupled with the SAS device.

**5.** The method of claim 1
wherein the step of reconfiguring further comprises:
adjusting speed negotiation parameters of the PHY relating to use of multiplexing functions;
resetting the PHY; and
permitting SAS speed negotiation to determine use of multiplexing functions on the PHY based on the adjusted speed negotiation parameters.

**6.** The method of claim 1 wherein the SAS device is a SAS initiator.

**7.** The method of claim 1 wherein the SAS device is a SAS expander.

**8.** A Serial Attached SCSI (SAS) device in a SAS domain, the SAS device comprising:
a configuration monitor module (104) adapted to monitor configuration and performance of devices and PHYs (110) in the SAS domain; and
a PHY reconfiguration module (106) coupled with the configuration monitor module to receive information regarding configuration and performance of devices and PHYs of the SAS domain, the PHY reconfiguration module adapted to reconfigure multiplexing parameters of a PHY while other PHYs of the SAS domain continue operation uninterrupted.

**9.** The SAS device of claim 8 further comprising:
SAS PHY event counters (108),
wherein the domain monitor module is adapted to monitor performance of devices and PHYs based on the SAS PHY event counters.

**10.** The SAS device of claim 9
wherein the domain monitor module is further adapted to monitor performance of devices and PHYs by accessing SAS PHY event counters (116) of other SAS devices (114) in the SAS domain.

**11.** The SAS device of claim 8 wherein the SAS device is a SAS initiator.

**12.** The SAS device of claim 8 wherein the SAS device is a SAS expander.
